# EUROPÄISCHE PATENTSCHRIFT

(11) **EP 3 165 070 B1**
(45) Veröffentlichungstag und Bekanntmachung des Hinweises auf die Patenterteilung: **06.06.2018**
(21) Anmeldenummer: 16401087.8
(22) Anmeldetag: 02.11.2016
(51) Int. Cl.: A01C 17/00, A01C 21/00

(54) **VERFAHREN ZUM AUSBRINGEN VON DÜNGER MIT EINEM SCHLEUDERSTREUER**
METHOD FOR DISTRIBUTING FERTILIZER WITH A CENTRIFUGAL SPREADER
PROCÉDÉ D'ÉPANDAGE D'ENGRAIS À L'AIDE D'UN ÉPANDEUR CENTRIFUGE

(30) Priorität: 06.11.2015 DE 102015119115
(43) Veröffentlichungstag der Anmeldung: 10.05.2017
(73) Patentinhaber: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Kleine-Hartlage, Hubertus, 49186 Bad Iburg (DE); Rahe, Florian, 49504 Lotte (DE)

(56) Entgegenhaltungen:
- DE-A1- 3 833 638
- DE-A1-102009 051 972
- DE-A1-102011 052 397

## Beschreibung

Die Erfindung betrifft ein Verfahren zum Ausbringen von Dünger mit einem Schleuderstreuer gemäß Oberbegriff des Anspruchs 1, wie bekannt aus DE 10 2009 051 972 A1, und einen Schleuderstreuer.
Wie beispielsweise aus der EP 1 692 929 A1 bekannt ist, werden für den normalen Düngeraustrag mit einem Schleuderstreuer Feldfahrgassen im Feldinneren abstandsgleich angelegt. Die Fahrgassen sind an ihren Enden durch ein Vorgewende miteinander verbunden. Im Feldinneren wird mit einem Normalstreubild vorgegebener Arbeitsbreite entsprechend dem regelmäßigen Abstand zwischen den Feldfahrgassen gearbeitet.

Ferner werden am Rand des zu bearbeitenden Feldes Grenzfahrgassen angelegt, die beispielsweise zu Beginn des Düngeraustrags abgefahren werden. Beim Befahren von Grenzfahrgassen, die vorzugsweise auch um das Vorgewende herum verlaufen, wird mit einem Grenzstreubild gearbeitet, das nur auf seiner der jeweiligen Feldgrenze zugewandten äußeren Seite eine steil abfallende Streuflanke aufweist, so dass möglichst wenig Dünger über die Feldgrenze hinaus gestreut wird. Zum Feldinneren hin wird dagegen mit einer Streuflanke des Normalstreubilds gearbeitet.
Gemäß EP 1 692 929 A1 kann ein solches asymmetrisches Streubild auch beim Befahren des Vorgewendes verwendet werden. Zusätzlich werden dort Ein- und Ausschaltzeitpunkte für Dosierungsorgane am Schleuderstreuer beim Wenden zugunsten einer gleichmäßigen Düngerverteilung optimiert.
Die EP 2 417 848 A2 offenbart ferner eine gezielte Anpassung des Streubilds beim Befahren von Grenzfahrgassen und daran gegebenenfalls keilförmig anschließender Fahrgassen ausschließlich in den jeweils der Feldgrenze zugewandten Streuflanken.
Problematisch ist, dass trotz derartiger Maßnahmen häufig Bereiche mit Unterdüngung auftreten mit der Folge eines unerwünschten Minderertrags, insbesondere im Bereich von Vorgewenden, die an eine quer dazu verlaufende Grenzfahrgasse anschließen.

Es besteht daher der Bedarf für einen möglichst gleichmäßigen Austrag von Dünger im Überlappungsbereich von Vorgewende und Grenzfahrgasse, insbesondere zur Vermeidung lokaler Unterdüngung.

Die gestellte Aufgabe wird mit einem Verfahren gemäß Anspruch 1 gelöst. Demnach dient dieses zum Ausbringen von Dünger mit einem Schleuderstreuer, wobei beim normalen Befahren von Feldfahrgassen im Feldinneren mit einem Normalstreubild einer vorgegebenen Arbeitsbreite gearbeitet wird, und wobei ferner ein die Feldfahrgassen verbindendes Vorgewende befahren wird. Fernerarbeitet man beim Befahren des Vorgewendes mit wenigstens einem Vorgewende-Streubild, bei dem eine der Fahrtrichtung des Schleuderstreuers entgegengesetzte hintere Wurfweite gegenüber dem Normalstreubild selektiv reduziert ist.

Dadurch kann das Streubild des Schleuderstreuers näher an eine quer zum Vorgewende verlaufende Grenzfahrgasse herangebracht werden, bevor der Düngeraustrag beim Wenden vorübergehend ausgeschaltet werden muss. Der Düngeraustrag im Überlappungsbereich von Vorgewende und Grenzfahrgasse wird dadurch gleichmäßiger. Insbesondere lässt sich dort eine lokale Unterdüngung gezielt reduzieren oder gar ganz vermeiden.

Vorzugsweise wird mit einem Zweischeibenstreuer mit im Abwurfbereich voneinander weg drehenden Streuscheiben gearbeitet. Die Streuscheiben erzeugen Streufächer, die im Streubetrieb entlang von Fahrgassen ein entsprechendes Streubild erzeugen. Bei ruhendem Schleuderstreuer entspricht der Streufächer dem Streubild. Die Querverteilung des Streubilds ergibt sich aus der Bewegung des gesamten Streufächers in Fahrtrichtung über eine in Richtung der Arbeitsbreite verlaufende Bezugslinie.

Vorzugsweise wird zumindest in einem Teilbereich des Vorgewendes mit einer um wenigstens 20% gegenüber dem Normalstreubild reduzierten hinteren Wurfweite gearbeitet. Dies ermöglicht ein effizientes Arbeiten im Vorgewende.

Vorzugsweise arbeitet man mit dem Vorgewende-Streubild innerhalb eines Teilbereichs des Vorgewendes, in dem die Fahrtrichtung des Schleuderstreuers von der jeweils anschließenden Feldfahrgasse um höchstens +/- 45° abweicht. Dies ermöglicht ein besonders effizientes Arbeiten im Vorgewende.

Vorzugsweise arbeitet man ferner in an das Vorgewende anschließenden Abschnitten der Feldfahrgassen mit dem Vorgewende-Streubild. Dies ermöglicht ein lückenloses und gleichmäßiges Streubild an Übergang der Feldfahrgassen zum Vorgewende.

Erfindungsgemäß wird die hintere Wurfweite des Vorgewende-Streubilds stärker gegenüber dem Normalstreubild reduziert als eine seitliche Wurfweite innerhalb eines seitlichen Winkelbereichs von 45° bis 90° dazu. Dies ermöglicht ein besonders effizientes Arbeiten im Vorgewende.

Vorzugsweise wird eine zur Fahrtrichtung seitlich orthogonale Wurfweite des Vorgewende-Streubilds höchstens um 10% gegenüber dem Normalstreubild reduziert und insbesondere im Wesentlichen konstant gehalten. Dies ermöglicht ein besonders effizientes Arbeiten im Vorgewende.

Vorzugsweise wird die hintere Wurfweite für einen Wechsel in das oder aus dem Vorgewende-Streubild im laufenden Arbeitsbetrieb graduell oder stufenweise geändert. Dies ermöglicht ein lückenloses und besonders gleichmäßiges Streubild an Übergang der Feldfahrgassen zum Vorgewende.

Vorzugsweise wird das Vorgewende-Streubild gegenüber dem Normalstreubild trapezförmig verzerrt. Dies ermöglicht ein dichtes Streubild im Übergangsbereich zur Grenzfahrgasse. Insbesondere wird eine Streuflanke des Normalstreubilds zum Erzeugen einer äußeren Vorgewende-Streuflanke trapezförmig verzerrt.

Darunter ist zu verstehen, dass eine im Wesentlichen dreieckige oder nur schwach trapezförmige Querverteilung des Düngers im Normalstreubild für das Befahren des Vorgewendes zumindest in der äußeren Vorgewende-Streuflanke zugunsten einer trapezförmigeren Querverteilung umverteilt wird. Dadurch kann ein vergleichsweise scharf abgegrenzter Feldstreifen in Richtung der Grenzfahrgasse ausreichend mit Dünger versorgt werden, so dass in diesem Feldstreifen weniger zusätzlicher Düngeraustrag beim Grenzfahren erforderlich ist.

Unter unterschiedlichen Querverteilungen sind qualitativ unterschiedliche Verläufe der Streumenge quer zur Fahrtrichtung zu verstehen, im Gegensatz zu einer vertikalen Spreizung oder Stauchung von Streubildern durch Änderung der Streumenge.

Das Normalstreubild hat zugunsten einer gleichmäßigen und stabilen Düngerverteilung beim normalen Anschlussfahren im Feldinneren meist eine im Wesentlichen dreieckige Querverteilung. Es hat sich demgegenüber überraschenderweise herausgestellt, dass im Bereich von Vorgewenden eine trapezförmige Querverteilung in der äußeren und/oder inneren Vorgewende-Streuflanke vorteilhaft ist. Ähnliche Vorteile ergeben sich bei entsprechender Modifikation einer beim Grenzfahren zum Feldinneren weisenden inneren Grenzstreuflanke.

Beispielsweise wird eine im seitlichen Abstand von 50% der Arbeitsbreite definierte Streumenge ausgehend von einer Streuflanke des Normalstreubilds in wenigstens einer Vorgewende-Streuflanke erhöht, insbesondere um wenigstens 20%. Dies führt zu einer effektiven trapezförmigen Streuflanke, insbesondere bei einer Erhöhung um wenigstens 50%. Ähnliche Vorteile ergeben sich bei entsprechender Modifikation einer beim Grenzfahren zum Feldinneren weisenden inneren Grenzstreuflanke.

Beispielsweise wird dabei ferner eine im seitlichen Abstand von 10% der Arbeitsbreite definierte Streumenge ausgehend von einer Streuflanke des Normalstreubilds in der wenigstens einen Vorgewende-Streuflanke erhöht. Dadurch kann die Düngermenge zur Vermeidung von Unterdüngung unmittelbar im Vorgewende angepasst werden. Ähnliche Vorteile ergeben sich bei entsprechender Modifikation einer beim Grenzfahren zum Feldinneren weisenden inneren Grenzstreuflanke.

Alternativ oder ergänzend kann wenigstens eine Streuflanke des Normalstreubilds zum Erzeugen des Vorgewende-Streubilds quer gespreizt oder gestaucht werden. Dadurch kann eine Teilarbeitsbreite oder die Arbeitsbreite insgesamt beim Befahren des Vorgewendes gezielt einseitig vergrößert oder verkleinert werden, um das Befahren des Vorgewendes zu optimieren.

Gemäß einem ersten vorteilhaften Teilaspekt werden Aufgabepunkte für den Dünger auf an dem Schleuderstreuer ausgebildeten Streuscheiben für einen Wechsel zum Vorgewende-Streubild verstellt werden, insbesondere durch Schwenken der Aufgabepunkte in Drehrichtung der Streuscheibe. Dadurch lässt sich die hintere Wurfweite gezielt verringern.

Der Aufgabepunkt ist beispielsweise als geometrischer Schwerpunkt einer Dosierungsöffnung zu verstehen, durch die der Dünger eingeleitet wird und auf die Streuscheibe fällt. Die Dosierungsöffnung ist Bestandteil eines Einleitsystems, das um die Drehachse der Streuscheibe gesteuert geschwenkt werden kann.

Gemäß einem zweiten vorteilhaften Teilaspekt wird die Drehzahl an dem Schleuderstreuer ausgebildeter Streuscheiben für einen Wechsel zum Vorgewende-Streubild verringert. Auch dadurch lässt sich die hintere Wurfweite verringern.

Gemäß einem dritten vorteilhaften Teilaspekt werden an dem Schleuderstreuer ausgebildete Streuscheiben für einen Wechsel zum Vorgewende-Streubild nach hinten geneigt. Dies ermöglicht eine selektive Reduktion der hinteren Wurfweite mit geringer Beeinflussung der seitlich orthogonalen Wurfweite. In ähnlicher Weise kann auch der gesamte Streuer nach hintern geneigt werden.

Gemäß einem vierten vorteilhaften Teilaspekt wird der Dünger hinter an dem Schleuderstreuer ausgebildeten Streuscheiben zum Erzeugen des Vorgewende-Streubilds mechanisch nach unten abgelenkt, insbesondere mittels Prallblechen. Dies ermöglicht eine selektive Reduktion in den von Prallblechen oder dergleichen Ablenkelementen abgedeckten Winkelbereich hinter der jeweiligen Streuscheibe.

Vorzugsweise wird das Vorgewende-Streubild auf einem Teilbereich des Vorgewendes, der an eine quer zu den Feldfahrgassen verlaufende Grenzfahrgasse angrenzt, zumindest einseitig abgeschaltet, insbesondere in einem Teilbereich, in dem die Fahrtrichtung des Schleuderstreuers von der jeweils anschließenden Feldfahrgasse um mindestens +/- 45° abweicht. Eine vollständige Abschaltung oder eine Teilabschaltung des Düngeraustrags im Vorgewende lässt sich mit dem Vorgewende-Streubild auf einen vergleichsweise kleinen Teilbereich des Vorgewendes beschränken. Dies ist hilfreich, um eine lokale Unterdüngung zu vermeiden.

Vorzugsweise wird das Vorgewende-Streubild mittels GPS-Steuerung automatisch aktiviert und/oder eingestellt. Mithilfe zuvor abgelegter Ortsdaten des zu bearbeitenden Felds und der anhand GPS-Daten ermittelten Position und Fahrtrichtung ist ein besonders exaktes Ein- und Ausschalten und eine reproduzierbare Anpassung des Vorgewende-Streubilds möglich.
Die gestellte Aufgabe wird ebenso mit einem Schleuderstreuer für Dünger gemäß Anspruch 14 gelöst. Der Schleuderstreuer umfasst zwei mittels eines Bordcomputers einstellbare Schleuderscheibeneinheiten und ein GPS-System, wobei mittels des Bordcomputers wenigstens ein erster Betriebszustand zum Erzeugen eines Normalstreubilds für das normale Befahren von Feldfahrgassen im Feldinneren und ein zweiter Betriebszustand zum Erzeugen eines Vorgewende-Streubilds für das Befahren eines Vorgewendes aktiviert werden können. Ferner ist der Bordcomputer dazu ausgebildet, das Vorgewende-Streubild gemäß wenigstens einer der vorigen Ausführungsformen des Verfahrens anhand empfangener GPS-Daten und durch Ansteuern der Schleuderscheibeneinheiten einzustellen.
Die Schleuderscheibeneinheiten umfassen jeweils separat ansteuerbare Schleuderscheiben und Einleitsysteme mit Dosierungsorganen.
Vorzugsweise umfassen die Schleuderscheibeneinheiten Einleitsysteme, die sich vom Bordcomputer gemäß dem ersten vorteilhaften Teilaspekt ansteuern lassen.
Vorzugsweise umfassen die Schleuderscheibeneinheiten Schleuderscheiben, deren Antriebseinheit sich vom Bordcomputer gemäß dem zweiten vorteilhaften Teilaspekt ansteuern lässt.
Vorzugsweise umfassen die Schleuderscheibeneinheiten Schleuderscheiben mit wenigstens einem Schwenkmechanismus, der sich vom Bordcomputer gemäß dem zweiten vorteilhaften Teilaspekt ansteuern lässt.
Vorzugsweise sind an den Schleuderscheiben Ablenkmittel, insbesondere Prallbleche oder dergleichen, vorhanden, die sich vom Bordcomputer gemäß dem vierten vorteilhaften Teilaspekt im Bereich der Schleuderscheiben positionieren lassen.
Bevorzugte Ausführungsformen sind in den Zeichnungen dargestellt. Es zeigen:
- Fig. 1: eine schematische Draufsicht auf ein Feld mit einem Schleuderstreuer;
- Fig. 2: eine schematische Draufsicht auf einen Schleuderstreuer;
- Fig. 3A und 3B: Querverteilungen von Streubildern im Vergleich; und
- Fig. 4: eine schematische Draufsicht auf ein Vorgewende.

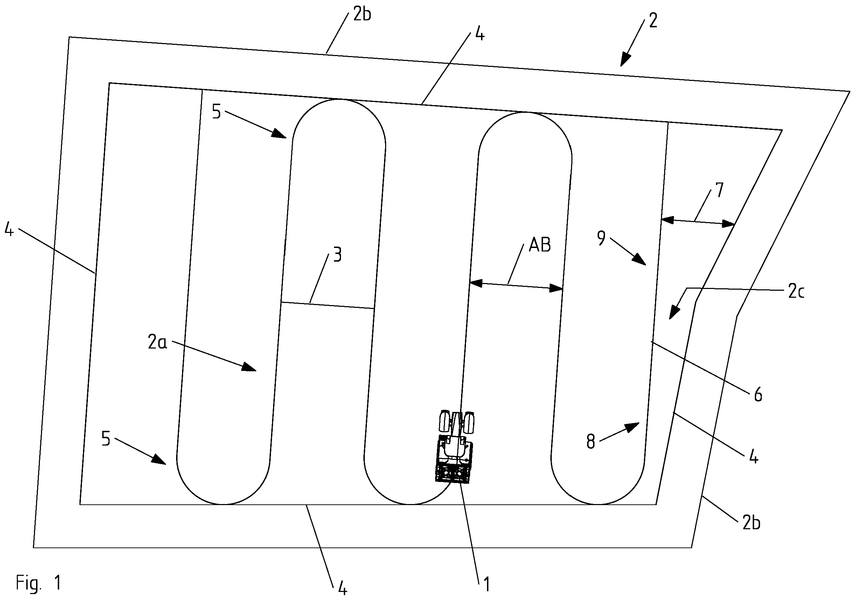

Wie die Fig. 1 erkennen lässt, sind auf einem mit einem Schleuderstreuer 1 zu bearbeitenden Feld 2 in bekannter Weise innere Feldfahrgassen 3 im Feldinneren 2a, eine äußere Grenzfahrgasse 4 entlang der Feldgrenze 2b, zwei Vorgewende 5 und eine seitliche Anschlussfahrspur 6 in einem Randbereich 2c des Felds 2 entlang der Grenzfahrgasse 4 angelegt.

Die Feldfahrgassen 3 sind mit einem einheitlichen Abstand zueinander angelegt, der einer für das normale Befahren der Feldfahrgassen 3 vorgegebenen Arbeitsbreite AB entspricht. Der Abstand 7 zwischen der Grenzfahrgasse 4 und der Anschlussfahrspur 6 ist kleiner als die Arbeitsbreite AB und kann entlang eines als Parallelfahrspur 8 ausgebildeten Abschnitts der Anschlussfahrspur 6 konstant sein und/oder entlang eines als Keilfahrspur 9 ausgebildeten Abschnitts der Anschlussfahrspur 6 variieren.

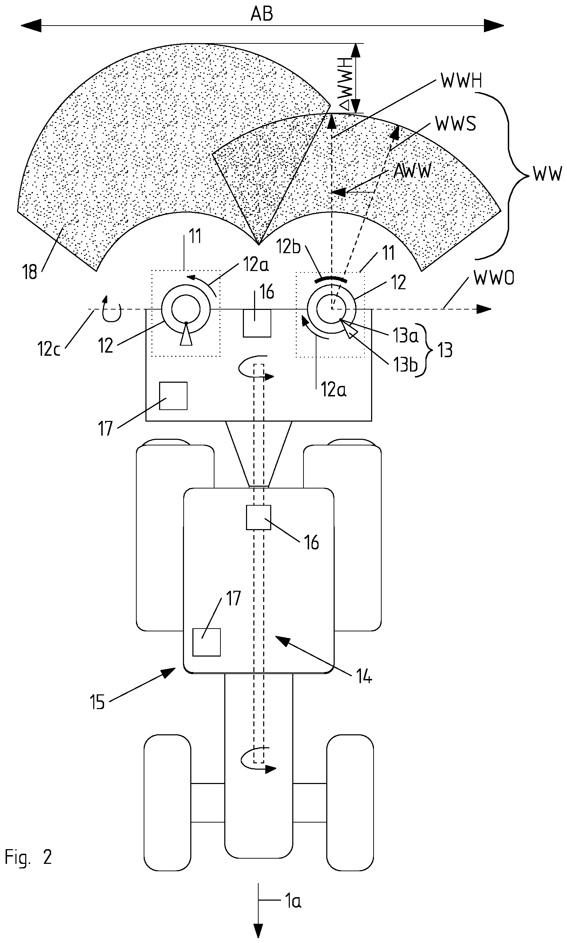

Wie die Fig. 2 erkennen lässt, ist der Schleuderstreuer 1 als Zweischeibenstreuer ausgebildet umfassend zwei separat ansteuerbare Streuscheibeneinheiten 11. Diese umfassen jeweils schematisch angedeutete Streuscheiben 12, sich die mit einer Drehzahl 12a in schematisch angedeuteter Richtung drehen, sowie Einleitsysteme 13 für Dünger mit schematisch angedeuteten Aufgabepunkten 13a auf die Streuscheiben 12 und Dosierungsorganen 13b.

An den Streuscheiben 12 können Ablenkelemente 12b, wie beispielsweise Prallbleche oder dergleichen ausgebildet sein, die sich motorisch in einen Abschnitt des Abwurfbereichs der Streuscheiben 12 bewegen lassen, um nach hinten abgeworfenen Dünger nach unten abzulenken. Der Übersichtlichkeit halber ist nur ein einziges Ablenkelement 12b stark schematisiert angedeutet.

Es können auch Ablenkelemente, wie beispielsweise Prallbleche am Streuer montiert sein, die sich motorisch in einen Abschnitt des Abwurfbereichs der Streuscheiben 12 bewegen lassen, um nach hinten abgeworfenen Dünger nach unten abzulenken. Das kann in ähnlicher Weise ausgeprägt sein, wie ein sogenannter Grenzstreuschirm, der jedoch die seitliche Wurfweite beschränkt. Im vorgeschlagenen Fall würde keine seitliche Ablenkung, sondern eine Ablenkung nach unten stattfinden.

Vorzugsweise können die Streuscheiben ferner mittels eines (schematisch angedeuteten) Kippmechanismus 12c mit ihrem Abwurfbereich motorisch nach unten geneigt werden, sodass der Dünger die Streuscheiben 12 bereits mit einer nach hinten unten geneigten Flugbahn verlässt. Weiterhin ließe sich auch der ganze Streuer nach hinten kippen, um den gleichen Effekt zu erzielen.

Die Aufgabepunkte 13a können in/entgegen der Drehrichtung der Streuscheiben 12 individuell verstellt werden, ebenso die mittels der Dosierungsorgane 13b jeweils eingeleitete Menge des Düngers. Die Drehzahlen 12a werden vorzugsweise für beide Streuscheibeneinheiten 11 gemeinsam an einer mechanischen oder hydraulischen Antriebseinheit 14 eingestellt, beispielsweise an einem zugeordneten Schlepper 15.

Der Schleuderstreuer 1 und/oder der Schlepper 15 umfassen ferner wenigstens ein GPS-System 16 und wenigstens einen Bordcomputer 17 oder dergleichen Steuereinheit zum individuellen Ansteuern der Streuscheibeneinheiten 11.

Für das Arbeiten entlang der Feldfahrgassen 3 wird mittels der Streuscheiben 12 ein bezüglich der Fahrtrichtung 1a symmetrischer Normalstreufächer 18 hinter dem Schleuderstreuer 1 erzeugt, von dem in der Fig. 2 der Übersichtlichkeit halber nur die in Fahrtrichtung 1a rechte Hälfte dargestellt ist. Zum Vergleich ist daneben die linke Hälfte eines erfindungsgemäß modifizierten Vorgewende-Streufächers 19 dargestellt.

Derartige Streufächer können beispielsweise anhand der vorgegebenen Arbeitsbreite AB und einer geeigneten Wurfweite WW charakterisiert werden, beispielsweise anhand einer der Fahrtrichtung 1a entgegengesetzten hinteren Wurfweite WWH, einer unter einem geeigneten Abwurfwinkel AWW definierten seitlichen Wurfweite WWS, einer seitlich orthogonal zur Fahrtrichtung 1a definierten orthogonalen Wurfweite WWO und/oder anhand anderweitiger zur Charakterisierung von Streufächern und Streubildern gebräuchlicher Parameter.

Diesbezüglich lässt die Fig. 2 erkennen, dass sich der Vorgewende-Streufächer 19 eine um Verkürzung ΔWWH geringere hintere Wurfweite WWH aufweist als der Normalstreufächer 18. Demgegenüber ist die seitlich orthogonale Wurfweite WWO bei beiden Streufächern 18, 19 im Wesentlichen identisch.

Die Streuscheibeneinheiten 11 können vorzugsweise unabhängig voneinander angesteuert werden, um entweder einzeln oder gemeinsam zwischen Normalstreufächern 18 und Vorgewende-Streufächern 19 zu wechseln.

Zusätzlich zu einer Reduzierung der hinteren Wurfweite WWH im Vorgewende 5 kann die Querverteilung des im Vorgewende 5 erzeugten Streubilds angepasst werden.

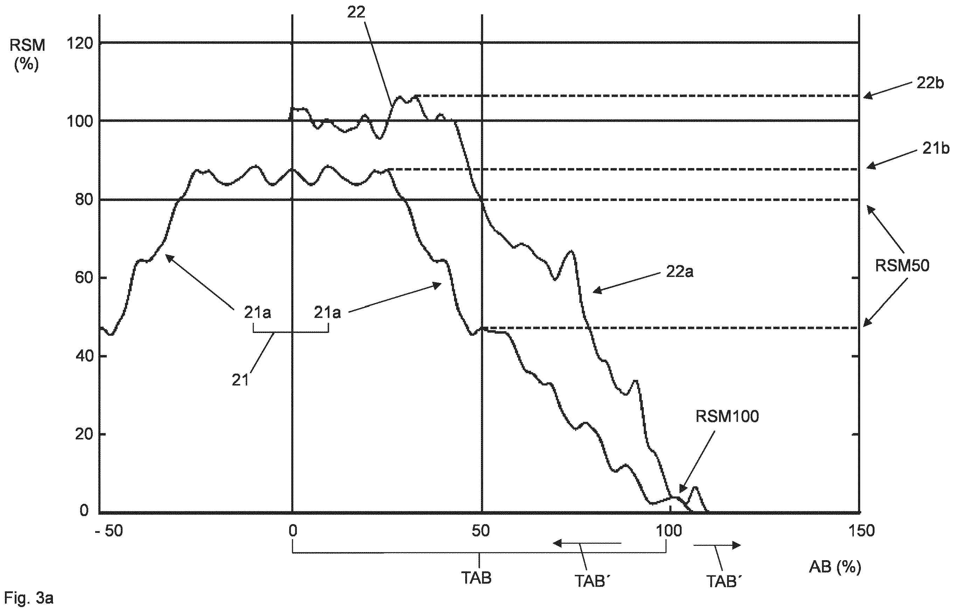

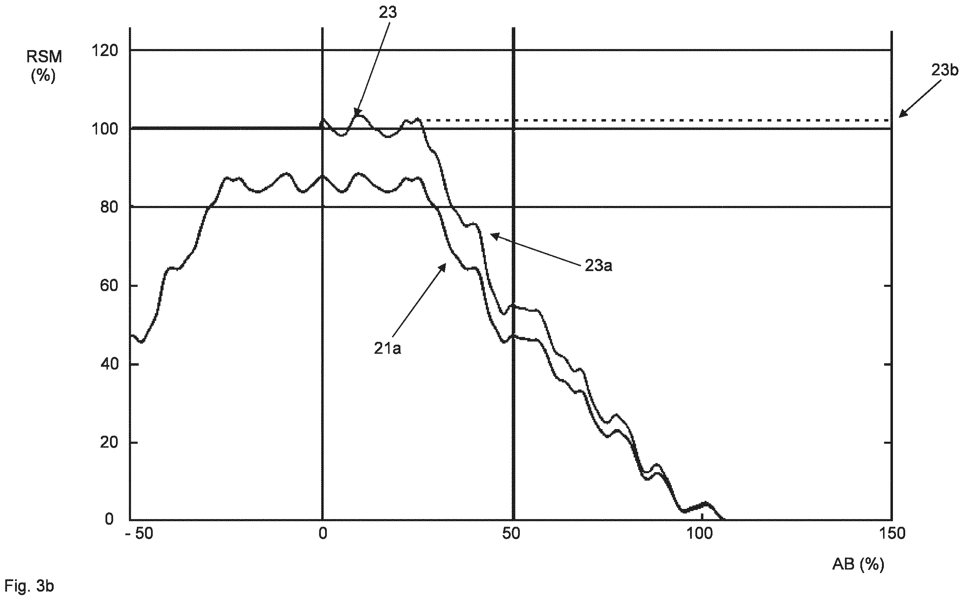

Wie die Figuren 3A und 3B diesbezüglich erkennen lassen, resultiert aus dem Befahren einer einzelnen Feldfahrgasse 3 mit dem Normalstreufächer 18 ein bezüglich der Feldfahrgasse 3 ebenfalls achsensymmetrisches Normalstreubild 21 mit einer vorzugsweise annähernd dreieckigen Querverteilung des Düngers bezogen auf die vorgegebene Arbeitsbreite AB. Das Normalstreubild 21 setzt sich aus zwei identischen Streuflanken 21a zusammen, von denen nur eine vollständig dargestellt ist. Die (nicht dargestellte) Längsverteilung des Düngers entlang der Feldfahrgassen 3 ist im Feldinneren 2a im Wesentlichen konstant.

In der Fig. 3A ist ferner eine beim Befahren des Vorgewendes 5 und daran unmittelbar anschließender Bereiche 3a der Feldfahrgassen 3 anwendbare Vorgewende-Streuflanke 22a eines Vorgewende-Streubilds 22 dargestellt. Die Vorgewende-Streuflanke 22a ist gegenüber der entsprechenden Streuflanke 21a des Normalstreubilds 21 trapezförmig verzerrt. Ferner ist ein Maximum 22b der relativen Streumenge RSM, die beispielsweise auf eine vorgegebene Masse pro Flächeneinheit bezogen ist, im Vorgewende-Streubild 22 größer als ein Maximum 21b der relativen Streumenge RSM im Normalstreubild 21.

Zum Vergleich ist in der Fig. 3B eine Streuflanke 23a eines alternativen Vorgewende-Streubilds 23 gezeigt, dessen Maximum 23b der relativen Streumenge RSM ohne trapezförmige Verzerrung des Normalstreubilds 21 angehoben wurde. Das alternative Vorgewende-Streubild 23 ist somit lediglich hinsichtlich der relativen Streumenge RSM vertikal gegenüber dem Normalstreubild gespreizt.

Dagegen ist unter einer Änderung der Querverteilung eine qualitative und insbesondere trapezförmige Verzerrung oder Umverteilung der relativen Streumenge RSM in Querrichtung (in den Figuren 3A und 3B in horizontaler Richtung) zu verstehen.

Die trapezförmige Verzerrung oder Umverteilung lässt sich in der Fig. 3A durch Vergleich der bei der Hälfte (50%) der vorgegebenen Arbeitsbreite AB jeweils ausgebrachten relativen Streumengen RSM50 erkennen. In der Streuflanke 21a des Normalstreubilds 21 beträgt die relative Streumenge RSM50 etwa 43%. In der Vorgewende-Streuflanke 22a des Vorgewende-Streubilds 22 beträgt die relative Streumenge RSM50 dagegen 80%.

Zum Erzeugen der Vorgewende-Streuflanke 22a hat sich eine Erhöhung der relativen Streumenge RSM50 (bei halber vorgegebener Arbeitsbreite AB) von wenigstens 20% gegenüber dem Normalstreubild 21 als wirksam herausgestellt. Besonders günstig ist eine Erhöhung um wenigstens 50%.

Wie die Fig. 3A ferner erkennen lässt, ändert sich eine relative Streumenge RSM100 bei 100% der vorgegebenen Arbeitsbreite AB in der Vorgewende-Streuflanke 22a nur unwesentlich oder gar nicht gegenüber dem entsprechenden Wert im Normalstreubild 21. Das heißt, die aus der trapezförmigen Verzerrung des Normalstreubilds 21 resultierende Teilarbeitsbreite TAB der Vorgewende-Streuflanke 22a entspricht der Teilarbeitsbreite TAB der entsprechenden Streuflanke 21a des Normalstreubilds 21.

Die Vorgewende-Streuflanke 22a und/oder die alternative Streuflanke 23a lassen sich prinzipiell sowohl beidseitig verwenden als auch einseitig in Kombination miteinander oder in Kombination mit einer Streuflanke 21a des Normalstreubilds. Auch können die einzelnen Streuflanken gegebenenfalls nacheinander bei Anfahren des Vorgewendes 5 bzw. beim Herausfahren eingeschaltet und ausgeschaltet werden.

Es wäre prinzipiell auch möglich, wenigstens eine der Teilarbeitsbreiten TAB im Vorgewende-Streubild 22 zu reduzieren, also beispielsweise eine zur Grenzfahrgasse 4 weisende äußere Vorgewende-Streuflanke 22a gegenüber der Streuflanke 21a in Querrichtung auf einen Wert TAB' zu stauchen. Dies kann wirkungsvoll sein, um näher an die Grenzfahrgasse 4 heranfahren zu können bzw. den Düngeraustrag später zu unterbrechen, insbesondere im Zusammenwirken mit einer trapezförmigen Verzerrung der Vorgewende-Streuflanke 22a.

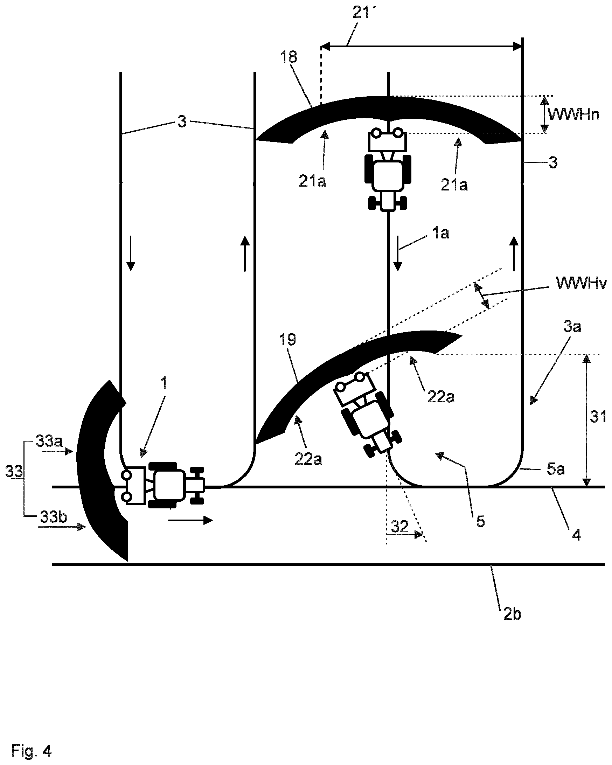

Die Fig. 4 verdeutlicht die Anwendung des Vorgewende-Streufächers 19 und des davon erzeugten Vorgewende-Streubilds 22 beim Befahren des Vorgewendes 5. Demnach wird das Vorgewende 5 mit dem Vorgewende-Streubild 22 umfassend wenigstens eine Vorgewende-Streuflanke 22a befahren, insbesondere mit zwei Vorgewende-Streuflanken 22a. Das Vorgewende-Streubild 22 kann beim Befahren des Vorgewendes 5 in prinzipiell bekannter Weise abgeschaltet oder teilabgeschaltet werden.

Zusätzlich gezeigt ist das normale Befahren einer Feldfahrgasse 3 unter Anwendung des Normalstreufächers 18 und somit des Normalstreubilds 21. Zum besseren Verständnis ist ein Teilbereich 21' des Normalstreubilds 21 bezeichnet, der den in den Figuren 3A und 3B von -50% bis +100% der vorgegebenen Arbeitsbreite AB gezeigten Streuflanken 21a entspricht.

Die hintere Wurfweite WWHv des Vorgewende-Streufächers 19 ist demnach gegenüber der hinteren Wurfweite WWHn des Normalstreufächers 18 reduziert, so dass das Streubild des Schleuderstreuers 1 näher an die Grenzfahrgasse 4 heran reichen kann, bevor eine Abschaltung oder Teilabschaltung im Vorgewende 5 nötig wird. Entsprechend früher kann beim Herausfahren aus dem Vorgewende 5 wieder eingeschaltet werden. Beispielhaft ist in der Fig. 4 hierfür ein Abstand 31 zwischen dem Vorgewende-Streufächer 19 und der Grenzfahrgasse 4 dargestellt.

Das Vorgewende 5 wird beispielsweise innerhalb eines Teilbereichs mit dem Vorgewende-Streufächer 19 befahren, in dem die Fahrtrichtung 1a des Schleuderstreuers 1 von der jeweils anschließenden Feldfahrgasse 3 um einen Winkel 32 von höchstens +/- 45° abweicht.

Entsprechend wird der Vorgewende-Streufächer 19 in einem Teilbereich des Vorgewendes 5 abgeschaltet oder teilabgeschaltet, in dem die Fahrtrichtung 1a des Schleuderstreuers 1 von der jeweils anschließenden Feldfahrgasse 3 um einen Winkel 32 von mindestens +/- 45° abweicht.

Die Fig. 4 verdeutlicht ferner die Anwendung eines Grenzstreubilds 33 beim Befahren der Grenzfahrgasse 4 im Bereich eines Vorgewendes 5. Vorzugsweise umfasst das Grenzstreubild 33 eine innere Grenzstreuflanke 33a und eine äußere Grenzstreuflanke 33b. Die äußere Grenzstreuflanke 33b ist auf bekannte Weise trapezförmig an den Abstand zur Feldgrenze 2b angepasst, um sowohl eine lokale Unterdüngung als auch einen Düngeraustrag über die Feldgrenze 2b hinaus zu vermeiden. Die innere Grenzstreuflanke 33a ist unabhängig davon vorzugsweise trapezförmig ausgehend von einer der Streuflanken 21a des Normalstreubilds 21 verzerrt, wie dies oben für die Vorgewende-Streuflanke 22a in Bezug auf die Fig. 3A beschrieben ist.

Die Düngerverteilung im Bereich des Vorgewendes 5 ergibt sich dann aus der Überlappung der inneren Grenzstreuflanke 33a beim Befahren der Grenzfahrgasse 4 und dem Vorgewende-Streubild 22 beim Befahren von Vorgewende-Fahrspuren 5a und/oder daran anschließender Bereiche 3a der Feldfahrgassen 3.

Mit der reduzierten hinteren Wurfweite WWHv des Vorgewende-Streufächers 19 lassen sich insbesondere im Zusammenwirken mit einer trapezförmigen inneren Grenzstreuflanke 33a vom herkömmlichen Grenzfahren bekannte Unterdüngungsbereiche im Übergangsbereich der Vorgewende-Fahrspuren 5a zu den anschließenden Bereiche 3a der Feldfahrgassen 3 substantiell verkleinern oder gänzlich vermeiden.

Zusätzlich lassen sich die Teilarbeitsbreite TAB' und die relative Streumenge RSM50 in den Vorgewende-Streuflanken 22a anpassen, um einer derartigen Unterdüngung entgegenzuwirken Ferner ist eine entsprechende Variation der Düngerdosierung möglich.

Die hintere Wurfweite WWH lässt sich ferner durch eine teilweise mechanische Abschirmung der Streuscheiben 12 nach hinten und/oder durch ein Neigen der Streuscheiben 12 und/oder des gesamten Streuers nach hinten unten reduzieren. Geeignete Abschirmbleche oder Prallbleche 12b können motorisch in eine geeignete Arbeitsposition gefahren werden. Für die Streuscheiben 12 können ferner geeignete Schwenkmechanismen 12c zum Abkippen der Streuscheiben 12 nach hinten unten vorhanden sein. Die Ansteuerung erfolgt dann jeweils GPSbasiert durch den Bordcomputer 17.

Die Reduzierung der hinteren Wurfweite WWH erfolgt selektiv gegenüber der seitlichen Wurfweite WWS, die beispielsweise bei einem geeigneten Abwurfwinkel AWW von 45 bis 90° definiert ist, und insbesondere selektiv gegenüber der seitlich orthogonalen Wurfweite WWO. Das heißt, die hintere Wurfweite WWH wird beispielsweise prozentual wenigstens doppelt so stark reduziert wie die seitliche Wurfweite WWS und/oder die orthogonale Wurfweite WWO. Erfindungsgemäß kann wie folgt gearbeitet werden:
Die Grenzfahrt um das Feld 2 wird vorzugsweise, jedoch nicht zwingend, zu Beginn des Düngeraustrags vorgenommen. Hierbei wird im Bereich der Vorgewende 5 mit dem Grenzstreubild 33 umfassend die vorzugsweise trapezförmig verzerrte innere Grenzstreuflanke 33a und eine herkömmliche äußere Grenzstreuflanke 33b gearbeitet.

In Bereichen, in denen die Grenzfahrgasse 4 im regelmäßigen Abstand entsprechend der vorgegebenen Arbeitsbreite AB entlang einer Feldfahrgasse 3 verläuft, kann eine Streuflanke des Normalstreubilds 21 als innere Grenzstreuflanke 33a verwendet werden.
Entlang einer Anschlussfahrspur 6 mit kleinerem Abstand als die Arbeitsbreite AB, beispielsweise einer Parallelfahrspur 8 oder Keilfahrspur 9, kann eine bezüglich der inneren Teilarbeitsbreite gestauchte Streuflanke des Normalstreubilds 21 als innere Grenzstreuflanke 33a verwendet werden oder eine speziell an die Parallelfahrspur 8 oder Keilfahrspur 9 angepasste Streuflanke.

Die Vorgewende 5 werden mit reduzierter hinterer Wurfweite WWHv befahren unter zwischenzeitlicher Abschaltung oder Teilabschaltung des Vorgewende-Streufächers 19 und des zugehörigen Vorgewende-Streubilds 22. Nach Streubildüberlappung mit obiger Grenzfahrt ergibt sich ein besonders gleichmäßiger Düngeraustrag mit reduzierter Gefahr einer lokalen Unterdüngung im Vorgewende 5.

Der Wechsel zwischen den jeweils angewendeten Streubildern, insbesondere die Aktivierung und Deaktivierung des Vorgewende-Streufächers 19 mit reduzierter hinterer Wurfweite WWHv erfolgt vorzugsweise automatisch durch GPS-Steuerung mittels des GPS-System 16. Hierzu werden geeignete Positionsdaten des Felds 2 auf bekannte Weise vorgehalten und mit Ist-Positionsdaten des Schleuderstreuers 1 bzw. des zugehörigen Schleppers 15 verglichen.

Mittels des Bordcomputers 17 können die Streuscheibeneinheiten 11 entweder gemeinsam oder einzeln gezielt angesteuert werden, um den Vorgewende-Streufächer 19 beidseitig oder einseitig einzustellen. Dies erfolgt beispielsweise durch Verstellen Drehzahl 12a und des Aufgabepunkts 13a am zugehörigen Einleitsystem 13. Ebenso sind mechanische Teilabschirmung nach hinten und/oder Abkippen der Streuscheiben 12 selektiv zum Erzeugen des Vorgewende-Streufächers 19 einsetzbar.

## Patentansprüche

1. Verfahren zum Ausbringen von Dünger mit einem Schleuderstreuer (1), wobei beim normalen Befahren von Feldfahrgassen (3) im Feldinneren (2a) mit einem Normalstreufächer (18) einer vorgegebenen Arbeitsbreite(AB) gearbeitet wird, wobei ferner ein die Feldfahrgassen (3) verbindendes Vorgewende (5) befahren wird, und wobei man beim Befahren des Vorgewendes (5) mit wenigstens einem Vorgewende-Streufächer (19) arbeitet, bei dem eine der Fahrtrichtung (1a) des Schleuderstreuers (1) entgegengesetzte hintere Wurfweite (WWHv) gegenüber dem Normalstreufächer (18) selektiv reduziert ist, **dadurch gekennzeichnet, dass** die hintere Wurfweite (WWHv) des Vorgewende-Streufächers stärker gegenüber dem Normalstreufächer (18) reduziert wird als eine seitliche Wurfweite (WWS) innerhalb eines seitlichen Winkelbereichs von 45° bis 90° dazu.

2. Verfahren nach Anspruch 1, wobei zumindest in einem Teilbereich des Vorgewendes (5) mit einer um wenigstens 20% gegenüber dem Normalstreufächer (18) reduzierten hinteren Wurfweite (WWHv) gearbeitet wird.

3. Verfahren nach Anspruch 1 oder 2, wobei mit dem Vorgewende-Streufächer (19) innerhalb eines Teilbereichs des Vorgewendes (5) gearbeitet wird, in dem die Fahrtrichtung (1a) des Schleuderstreuers (1) von der jeweils anschließenden Feldfahrgasse (5) um einen Winkel (32) von höchstens +/- 45° abweicht.

4. Verfahren nach einem der vorigen Ansprüche, wobei ferner in an das Vorgewende (5) anschließenden Abschnitten (3a) der Feldfahrgassen (3) mit dem Vorgewende-Streufächer (19) gearbeitet wird.

5. Verfahren nach wenigstens einem der vorigen Ansprüche, wobei eine zur Fahrtrichtung (1a) seitlich orthogonale Wurfweite (WWO) des Vorgewende-Streufächers (19) höchstens um 10% gegenüber dem Normalstreufächer (18) reduziert und insbesondere im Wesentlichen konstant gehalten wird.

6. Verfahren nach wenigstens einem der vorigen Ansprüche, wobei die hintere Wurfweite (WWH) für einen Wechsel in den oder aus dem Vorgewende-Streufächer (19) im laufenden Arbeitsbetrieb graduell oder stufenweise geändert wird.

7. Verfahren nach wenigstens einem der vorigen Ansprüche, wobei ein Vorgewende-Streubild (22) gegenüber einem Normalstreubild (21) trapezförmig verzerrt wird.

8. Verfahren nach wenigstens einem der vorigen Ansprüche, wobei Aufgabepunkte (13a) für den Dünger auf an dem Schleuderstreuer (1) ausgebildeten Streuscheiben (12) für einen Wechsel zum Vorgewende-Streufächer (19) verstellt werden, insbesondere durch Schwenken der Aufgabepunkte (13a) in Drehrichtung der Streuscheibe (12).

9. Verfahren nach wenigstens einem der vorigen Ansprüche, wobei die Drehzahl (12a) an dem Schleuderstreuer (1) ausgebildeter Streuscheiben (12) für einen Wechsel zum Vorgewende-Streufächer (19) verringert wird.

10. Verfahren nach wenigstens einem der vorigen Ansprüche, wobei an dem Schleuderstreuer (1) ausgebildete Streuscheiben (12) und/oder der gesamte Streuer für einen Wechsel zum Vorgewende-Streufächer (19) nach hinten geneigt werden nach hinten geneigt wird.

11. Verfahren nach wenigstens einem der vorigen Ansprüche, wobei der Dünger hinter an dem Schleuderstreuer (1) ausgebildeten Streuscheiben (12) zum Erzeugen des Vorgewende-Streufächers (19) mechanisch nach unten abgelenkt wird, insbesondere mittels Prallblechen (12b).

12. Verfahren nach wenigstens einem der vorigen Ansprüche, wobei der Vorgewende-Streufächer (19) auf einem Teilbereich des Vorgewendes (5), der an eine quer zu den Feldfahrgassen (3) verlaufende Grenzfahrgasse (4) angrenzt, abgeschaltet wird, insbesondere in einem Teilbereich, in dem die Fahrtrichtung (1a) des Schleuderstreuers (1) von der jeweils anschließenden Feldfahrgasse (3) um einen Winkel (32) von mindestens +/- 45° abweicht.

13. Verfahren nach wenigstens einem der vorigen Ansprüche, wobei der Vorgewende-Streufächer (19) mittels GPS-Steuerung automatisch aktiviert wird.

14. Schleuderstreuer (1) für Dünger mit zwei mittels eines Bordcomputers (17) einstellbaren Schleuderscheibeneinheiten (11), und mit einem GPS-System (16), wobei mittels des Bordcomputers (17) wenigstens ein erster Betriebszustand zum Erzeugen eines Normalstreufächers (18) für das normale Befahren von Feldfahrgassen (3) im Feldinneren (2a) und ein zweiter Betriebszustand zum Erzeugen eines Vorgewende-Streufächers (19) für das Befahren eines Vorgewendes (5) aktiviert werden können, wobei der Bordcomputer (17) ausgebildet ist, den Vorgewende-Streufächer (19) gemäß dem Verfahren nach wenigstens einem der vorigen Ansprüche anhand empfangener GPS-Daten und durch Ansteuern der Schleuderscheibeneinheiten (11) einzustellen.

## Claims

1. Method for distributing fertilizer with a centrifugal spreader (1), wherein, when normally passing over field tramlines (3) in the field interior (2a), a normal spreading sweep (18) of a predetermined working width (AB) is used, wherein furthermore a headland (5) that adjoins the field tramlines (3) is passed over, and wherein, when passing over the headland (5), at least one headland spreading sweep (19) is used, in which method a rear spreading range (WWHv), counter to the travelling direction (1a) of the centrifugal spreader (1), is selectively reduced in comparison with the normal spreading sweep (18), **characterized in that** the rear spreading range (WWHv) of the headland spreading sweep is reduced more in comparison with the normal spreading sweep (18) than a lateral spreading range (WWS) within a lateral angular region of 45° to 90° thereto.

2. Method according to Claim 1, wherein, at least in a partial region of the headland (5), a rear spreading range (WWHv) that is reduced by at least 20% in comparison with the normal spreading sweep (18) is used.

3. Method according to Claim 1 or 2, wherein the headland spreading sweep (19) is used within a partial region of the headland (5) in which the travelling direction (1a) of the centrifugal spreader (1) deviates from the respectively adjoining field tramline (5) by an angle (32) of at most +/-45°.

4. Method according to one of the preceding claims, wherein furthermore, in portions (3a) of the field tramlines (3) adjoining the headland (5), the headland spreading sweep (19) is used.

5. Method according to at least one of the preceding claims, wherein a spreading range (WWO) laterally orthogonal to the travelling direction (1a) of the headland spreading sweep (19) is reduced at most by 10% in comparison with the normal spreading sweep (18) and in particular is kept substantially constant.

6. Method according to at least one of the preceding claims, wherein, for changing to or from the headland spreading sweep (19), the rear spreading range (WWH) is changed gradually or step by step during the course of working operation.

7. Method according to at least one of the preceding claims, wherein a headland spreading pattern (22) is distorted in comparison with a normal spreading pattern (21) in a trapezoidal manner.

8. Method according to at least one of the preceding claims, wherein feed points (13a) for the fertilizer to spreading discs (12) formed on the centrifugal spreader (1) are adjusted for changing to the headland spreading sweep (19), in particular by pivoting the feed points (13a) in the direction of rotation of the spreading disc (12).

9. Method according to at least one of the preceding claims, wherein the rotational speed (12a) of spreading discs (12) formed on the centrifugal spreader (1) is reduced for changing to the headland spreading sweep (19).

10. Method according to at least one of the preceding claims, wherein spreading discs (12) formed on the centrifugal spreader (1) and/or the entire spreader are inclined rearwards is inclined rearwards for changing to the headland spreading sweep (19).

11. Method according to at least one of the preceding claims, wherein the fertilizer is mechanically diverted downwards behind spreading discs (12) formed on the centrifugal spreader (1) for producing the header spreading sweep (19), in particular by means of baffle plates (12b).

12. Method according to at least one of the preceding claims, wherein the headland spreading sweep (19) is switched off over a partial region of the headland (5) that adjoins a border tramline (4) extending transversely in relation to the field tramlines (3), in particular in a partial region in which the travelling direction (1a) of the centrifugal spreader (1) deviates from the respectively adjoining field tramline (3) by an angle (32) of at least +/-45°.

13. Method according to at least one of the preceding claims, wherein the headland spreading sweep (19) is automatically activated by means of GPS control.

14. Centrifugal spreader (1) for fertilizer comprising two centrifugal disc units (11) that can be set by means of an on-board computer (17), and comprising a GPS system (16), wherein at least a first operating state for generating a normal spreading sweep (18) for normally passing over field tramlines (3) in the field interior (2a) and a second operating state for generating a headland spreading sweep (19) for passing over a headland (5) can be activated by means of the on-board computer (17), wherein the on-board computer (17) is designed to set the headland spreading sweep (19) according to the method according to at least one of the preceding claims on the basis of received GPS data and by activating the centrifugal disc units (11).

## Revendications

1. Procédé destiné à l'épandage de fertilisant avec un épandeur centrifuge (1) dans lequel le travail est réalisé par le biais d'une zone normale d'épandage (18) sur une largeur de travail prédéterminée (AB), lors du passage normal sur les voies de jalonnage dans un champ (3), à l'intérieur d'un champ (2a) dans lequel un passage est en outre effectué sur une tournière (5) qui réalise la jonction avec les voies de jalonnage dans un champ (3) ; et dans lequel le travail est réalisé avec tout au moins une zone d'épandage (19) de la tournière, lors du passage sur la tournière (5), pour laquelle zone d'épandage de la tournière une distance de projection arrière (WWHv), laquelle se trouve en sens inverse de la direction de la conduite (1a) de l'épandeur centrifuge (1), est réduite de manière sélective par rapport à la zone normale d'épandage (18) ;
**caractérisé en ce que** la distance de projection arrière (WWHv) de la zone d'épandage de la tournière est réduite de manière plus importante, par rapport à la zone normale d'épandage (18), qu'une distance de projection latérale (WWS) à l'intérieur d'une plage angulaire latérale de 45° à 90° de celle-ci.

2. Procédé selon la revendication 1, dans lequel le travail est effectué tout au moins dans une zone partielle de la tournière (5) avec une distance de projection arrière (WWHv), laquelle est réduite de tout au moins 20 % par rapport à la zone normale d'épandage (18) .

3. Procédé selon la revendication 1 ou 2, dans lequel le travail est effectué avec la zone d'épandage (19) de la tournière à l'intérieur d'une zone partielle de la tournière (5), dans laquelle zone partielle la direction de la conduite (1a) de l'épandeur centrifuge (1) dévie d'un angle (32) de tout au plus +/- 45°, par rapport à la voie de jalonnage dans un champ (5) qui se trouve respectivement en jonction.

4. Procédé selon l'une des revendications précédentes, dans lequel le travail est en outre effectué avec la zone d'épandage (19) de la tournière dans des sections (3a) des voies de jalonnage dans un champ (3), lesquelles sections forment une jonction avec la tournière (5).

5. Procédé selon tout au moins l'une des revendications précédentes, dans lequel une distance de projection orthogonale (WWO) de la zone d'épandage (19) de la tournière, laquelle distance de projection orthogonale évolue de manière latérale par rapport à la direction de la conduite (1a), est réduite de tout au plus 10 % par rapport à la zone normale d'épandage (18) et est, en particulier, maintenue pour l'essentiel constante.

6. Procédé selon tout au moins l'une des revendications précédentes, dans lequel la distance de projection arrière (WWH) est modifiée de manière graduelle ou progressive pendant le régime de travail, pour un changement dans la zone d'épandage (19) de la tournière ou en dehors de la zone d'épandage de la tournière.

7. Procédé selon tout au moins l'une des revendications précédentes, dans lequel une courbe d'épandage (22) de la tournière est déformée de manière trapézoïdale par rapport à une courbe normale d'épandage (21).

8. Procédé selon tout au moins l'une des revendications précédentes, dans lequel des points de chute (13a) pour le fertilisant sont ajustés par rapport aux disques d'épandage (12) qui sont mis en place au niveau de l'épandeur centrifuge (1), pour un changement vers la zone d'épandage (19) de la tournière, en particulier par le pivotement des points de chute (13a) dans le sens de rotation du disque d'épandage (12).

9. Procédé selon tout au moins l'une des revendications précédentes, dans lequel la vitesse de rotation (12a) des disques d'épandage (12) qui sont mis en place au niveau de l'épandeur centrifuge (1) est diminuée pour un changement vers la zone d'épandage (19) de la tournière.

10. Procédé selon tout au moins l'une des revendications précédentes, dans lequel des disques d'épandage (12) qui sont mis en place au niveau de l'épandeur centrifuge (1) et/ou l'épandeur dans son intégralité sont inclinés vers l'arrière est incliné vers l'arrière pour un changement vers la zone d'épandage (19) de la tournière.

11. Procédé selon tout au moins l'une des revendications précédentes, dans lequel le fertilisant est détourné vers le bas de manière mécanique, en particulier au moyen de tôles de déflection (12b), à l'arrière des disques d'épandage (12) qui sont mis en place au niveau de l'épandeur centrifuge (1), en vue de la production de la zone d'épandage (19) de la tournière.

12. Procédé selon tout au moins l'une des revendications précédentes, dans lequel la zone d'épandage (19) de la tournière est désactivée sur une zone partielle de la tournière (5), laquelle zone partielle est adjacente à une voie de jalonnage de délimitation (4) qui court à la perpendiculaire par rapport aux voies de jalonnage dans un champ (3), en particulier dans une zone partielle, dans laquelle la direction de la conduite (1a) de l'épandeur centrifuge (1) dévie d'un angle (32) d'au moins +/- 45°, par rapport à la voie de jalonnage dans un champ (3) qui se trouve respectivement en jonction.

13. Procédé selon tout au moins l'une des revendications précédentes, dans lequel la zone d'épandage (19) de la tournière est activée automatiquement au moyen d'une commande par GPS.

14. Épandeur centrifuge (1) pour fertilisant avec deux unités de disque centrifuge (11), lesquelles peuvent être réglées au moyen d'un ordinateur de bord (17), et avec un système GPS (16) dans lequel tout au moins un premier état de fonctionnement, lequel est destiné à la production d'une zone normale d'épandage (18) pour le passage normal sur des voies de jalonnage dans un champ (3), à l'intérieur d'un champ (2a), ainsi qu'un deuxième état de fonctionnement, lequel est destiné à la production d'une zone d'épandage (19) de la tournière pour le passage sur une tournière (5), peuvent être activés au moyen d'un ordinateur de bord (17) dans lequel l'ordinateur de bord (17) est configuré en vue de régler la zone d'épandage (19) de la tournière, conformément au procédé selon tout au moins l'une des revendications précédentes, à l'aide des données GPS reçues, ainsi que par le pilotage des unités de disque centrifuge (11).
